Europäisches Patentamt

European Patent Office

Office européen des brevets

(11) Veröffentlichungsnummer: **0 472 825 A1**

## EUROPÄISCHE PATENTANMELDUNG

(21) Anmeldenummer: **91108584.3**

(51) Int. Cl.5: **A22C 11/10**

(22) Anmeldetag: **27.05.91**

(30) Priorität: **29.08.90 DE 9012381 U**

(43) Veröffentlichungstag der Anmeldung:
**04.03.92 Patentblatt 92/10**

(84) Benannte Vertragsstaaten:
**AT CH DE ES FR GB IT LI**

(71) Anmelder: **Albert Handtmann
Maschinenfabrik GmbH & Co. KG
Birkenallee 25-29
W-7950 Biberach a.d. Riss 1(DE)**

(72) Erfinder: **Staudenrausch, Georg
Magnolienweg 3
W-7950 Biberach/Riss-Rissegg(DE)**

(74) Vertreter: **Patentanwälte Grünecker,
Kinkeldey, Stockmair & Partner
Maximilianstrasse 58
W-8000 München 22(DE)**

(54) **Vorrichtung zum Abteilen eines von einer Füllmaschine kommenden durchgehenden Wurststranges in einzelne Würste.**

(57) Die Erfindung betrifft eine Vorrichtung zum Abteilen eines von einer Füllmaschine kommenden durchgehenden Wurststranges in einzelne Würste.

Um eine solche Vorrichtung bezüglich der Verluste an den Einschnürungen zu verbessern, werden V-förmige, gegensinnig schräge und beim Abteilvorgang mit V-förmigen Ausschnitten verschränkt ineinandergreifende Verdrängerelemente eingesetzt, die im Bereich der Wurzel des V-Ausschnittes relativ zu ihrer sonstigen Wandstärke dünn ausgebildet sind.

FIG.1

Die Erfindung betrifft eine Vorrichtung zum Abteilen eines von einer Füllmaschine kommenden durchgehenden Wurststranges in einzelne Würste, bestehend aus einer Einrichtung zum Drehen des Wurststranges, einer Abteileinrichtung mit mindestens zwei um je eine, quer zur Transportrichtung des Wurststranges angeordnete Antriebsachse gegenläufig umlaufend angetriebenen, V-förmigen, gegensinnig schrägen und beim Abteilvorgang mit den V-Ausschnitten verschränkt ineinandergreifenden, plattenförmigen Verdrängerelementen und einer die abgeteilten Würste weiterfördernden Transporteinrichtung.

Bei einer bekannten Vorrichtung dieser Art (DDR-Patentschrift 247 829) sind die Verdrängerelemente als Rippen an zwei Förderrollen angebracht, die einen gemeinsamen Antrieb mit der Transporteinrichtung haben, so daß nur Würste einer bestimten Länge hergestellt werden können. Die auf den Förderrollen angesetzten Verdrängerrippen lassen im Eingriff einen sowohl in axialer als auch in radialer Richtung verhältnismäßig großen Durchlaß frei, so daß an der Einschnürungsstelle im Wurstdarm Brät verbleibt.

Der Erfindung liegt die Aufgabe zugrunde, eine solche Vorrichtung bezüglich der Verluste an den Einschnürungen zu verbessern.

Zur Lösung dieses technischen Problems sieht die Erfindung bei einer solchen Vorrichtung vor, daß jedes Verdrängerelement im Bereich der V-Wurzel relativ zu ihrer sonstigen Wandstärke dünn ausgebildet ist.

Durch diese Maßnahme wird die Einschnürung so eng erzielt daß sich keinerlei Brät mehr an der Einschnürstelle in der Wursthülle befindet, also Verluste weitestgehend vermieden werden. Außerdem kann insbesondere bei empfindlichen Wursthüllen eine höhere Portionierleistung erzielt werden.

Nachdem die Verdrängerelemente um Antriebsachsen umlaufen, die quer zur Transportrichtung des Wurststranges angeordnet sind, können die Einsatzmöglichkeiten einer solchen Vorrichtung, bei welcher jedes Verdrängerelement im Bereich der V-Wurzel relativ zu ihrer sonstigen Wandstärke dünn ausgebildet ist, dadurch verbessert werden, daß die Verdrängerelemente eine eigene Einheit mit einem eigenen Antrieb bilden, dessen Drehzahl während des Umlaufes durch eine elektronische Steuerung regelbar ist. Somit können praktisch ohne Verluste in den Einschnürungen je nach der Umlaufgeschwindigkeit der Verdrängerelemente längere oder auch kürze Würste abgeteilt werden.

Damit sich die Verdrängerelemente im Bereich ihrer V-Wurzeln beim Eingriff besonders dicht nähern können, kann gemäß der Erfindung jedes Verdrängerelement im Bereich der beiden, an den V-Ausschnitt angrenzenden radial verlaufenden Rändern diagonal gegenüberliegend eine konkave Aussparung aufweisen, so daß sich jedes Element vom Bereich der V-Wurzel bis zum Rand in der Art einer Abwälzfläche verjüngt.

Dabei kann jeder verjüngte Rand eine kreissektorförmige Aussparung aufweisen, was besonders vorteilhaft für Verdrängerelemente für große Wurstkaliber ist.

Ungeachtet der konkaven Aussparungen und der kreissektorförmigen Aussparungen kann jedes Verdrängerlement eine ausreichende Festigkeit gewährleistende Dicke aufweisen, so daß es auch möglich ist, jedes Verdrängerelement aus Kunststoff zu fertigen, was sowohl lebensmitteltechnisch als auch fertigungstechnisch von großem Vorteil ist.

Weitere Merkmale und Vorteile der Erfindung ergeben sich aus der nachfolgenden Beschreibung in Verbindung mit der Zeichnung, in welcher zwei Ausführungsbeispiele dargestellt sind.

Dabei zeigen:

Figur 1      schematisch die Vorrichtung in Seitenansicht,

Figur 2      eine Draufsicht auf die Vorrichtung,

Figur 3      ein einzelnes Verdrängerelement in Seitenansicht,

Figur 4      das Verdrängerlement im Schnitt gemäß der Linie IV-IV in Fig.3,

Figur 5      ein solches Verdrängerelement in Vorderansicht,

Figur 6      ein einzelness Verdrängerelement für größere Wurstkaliber in Seitenansicht und

Figur 7      die beiden Verdrängerelemente in verschränkter Stellung.

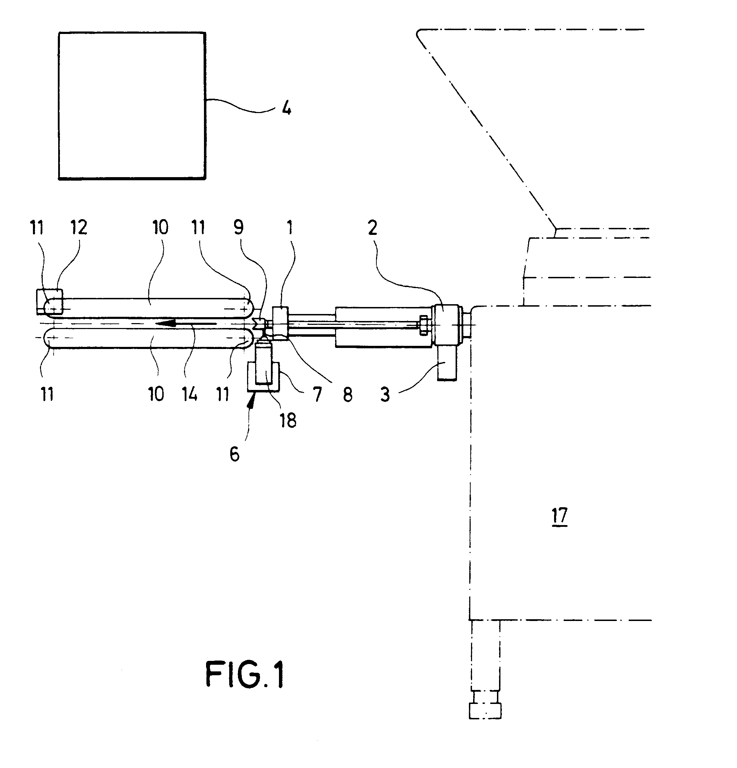

In Figur 1 ist strichpunktiert die mit 17 bezeichnete Füllmaschine dargestellt, aus welcher kontinuierlich das Füllgut in Strangform austritt und in der üblichen Weise in die Hülle eingefüllt wird. Der so geschaffene Wurststrang wird durch die zentrische Öffnung eines Bremsringes 1 gefördert, der durch ein Abdrehgetriebe 2 in Drehung versetzt werden kann und dabei den Wurststrang mitdreht.

Das Abdrehgetriebe 2 wird von einem Elektromotor 3 angetrieben, der von einer elektronischen Steuerung 4 drehzahlgeregelt wird.

Unmittelbar nach dem Bremsring 1 gelangt der Wurststrang zu einer Abteileinrichtung, die aus einer insgesamt mit 6 bezeichneten Verdrängereinheit besteht. Diese Verdrängereinheit 6 wird dargestellt durch einen Elektromotor 7, der mit einem Getriebe 18 zusammengebaut ist, welches zwei Antriebswellen 8 aufweist.

Der Elektromotor 7 wird ebenfalls von der elektronischen Steuerung 4 drehzahlgeregelt.

Auf jeder Antriebswelle 8 ist ein Verdrängerelement 9 aufgesteckt und damit starr verbunden.

Der Abteileinrichtung ist eine Transporteinrichtung nachgeschaltet, die aus zwei Endlosförderbändern 10 besteht. Die Förderbänder 10 sind um Umlenkräder 11 geführt, von denen welche als Antriebsräder mit einem drehzahlregelbaren Elektromotor 12 verbunden sind, der wiederum von der elektronischen Steuerung 4 geregelt wird.

Die Förderbänder 10 laufen im Gegensinn um und transportieren die abgeteilten Würste 13 in Pfeilrichtung 14 ab.

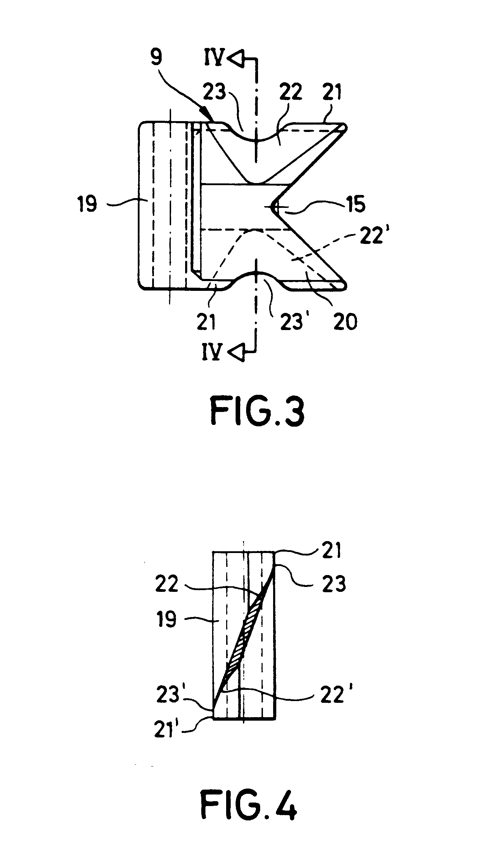

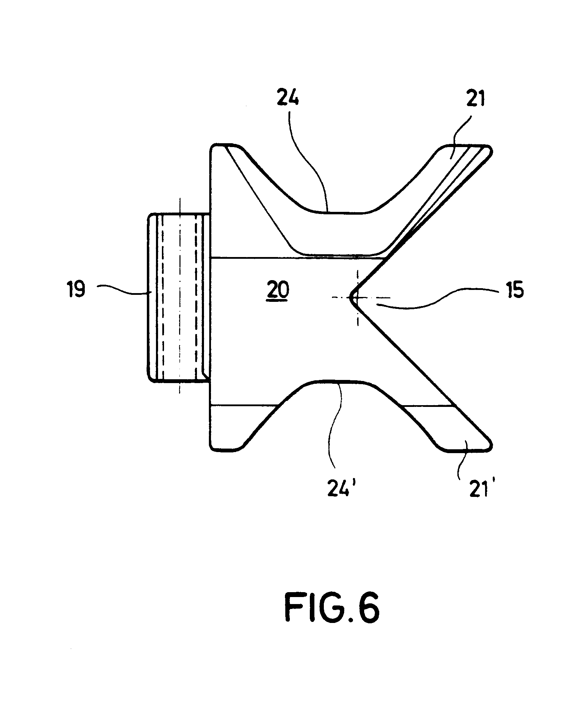

Jedes Verdrängerelement 9 ist fahnenförmig an der zugeordneten Antriebswelle 8 des Getriebes angebracht und weist einen V-förmigen Ausschnitt 15 auf, der zum Wurstrang hin randoffen ist (Figur 3). Jedes Verdrängerelement 9 weist eine Lagerhülse 19 auf, mit welcher das Verdrängerelement auf die zugeordnete Antriebswelle 8 aufgesteckt und damit formschlüssig verbunden ist.

Die beiden Antriebswellen 8 ragen aus dem Getriebe 18 im Abstand und parallel zueinander heraus und werden synchron und gegenläufig angetrieben.

Jedes Verdrängerelement 9 weist einen platenförmigen Flügel 20 auf, der an der Lagerhülse 19 befestigt ist bzw. einstückig mit dieser gefertigt ist.

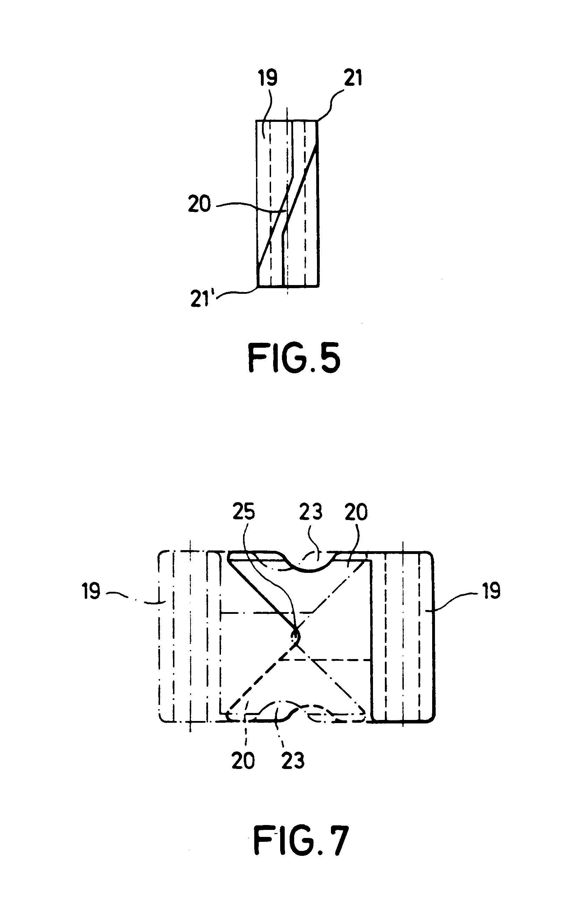

Der plattenförmige Flügel 20 ist relativ zur Hauptachse der Lagerhülse 19 schräg angeordnet, dergestalt, daß die beiden zusammenwirkenden Flügel 20 in der Abteilstellung verschränkt ineinandergreifen, wie dies in Figur 7 gezeigt ist. In der Figur 5, in welcher das Verdrängerelement 9 in Vorderansicht dargestellt ist, ist zu sehen, daß der Verdrängerflügel 20 im Bereich der Wurzel der V-förmigen Aussparung 15 im Verhältnis zu seiner sonstigen Wandstärke dünn ausgebildet ist.

Wie aus den Figuren 3 und 6 hervorgeht, weist jeder Verdrängerflügel 20 im Bereich der beiden an den V-Ausschnitt 15 angrenzenden, radial verlaufenden Rändern 21 und 21 ` diagonal gegenüberliegend eine konkave Aussparung 22 und 22' auf, so daß sich jedes Element vom Bereich der Wurzel des V-Ausschnittes 15 bis zum Rand 21 bzw. 21' verjüngt.

Wie in Figur 3 gezeigt, befindet sich die konkave Aussparung 22 auf der Innenseite des Flügels 20 im Bereich des oberen Randes 21, während die konkave Aussparung 22' auf der Außenseite des Flügels 20 im Bereich des unteren Randes 21' angebracht ist.

Der obere verjüngte Rand 21 weist eine kreissektorförmige Aussparung 23 und der untere verjüngte Rand 21' eine gleichgestaltete kreissektorförmige Aussparung 23' auf.

Im Ausführungsbeispiel gemäß Figur 6 ist der Flügel 20 wesentlich größer ausgebildet als im Beispiel nach Figur 3. Solche großen Verdrängerflügel sind dazu geeignet, Würste mit großem Kaliber von etwa 32 bis 65 mm abzuteilen.

Sie stimmen in der Ausbildung mit dem in Figur 3 dargestellten Flügel überein. Allerdings ist die an den verjüngten Rändern 21 und 21' angebrachte kreissektorförmige Aussparung 24 und 24' wesentlich größer als im Beispiel nach Figur 3.

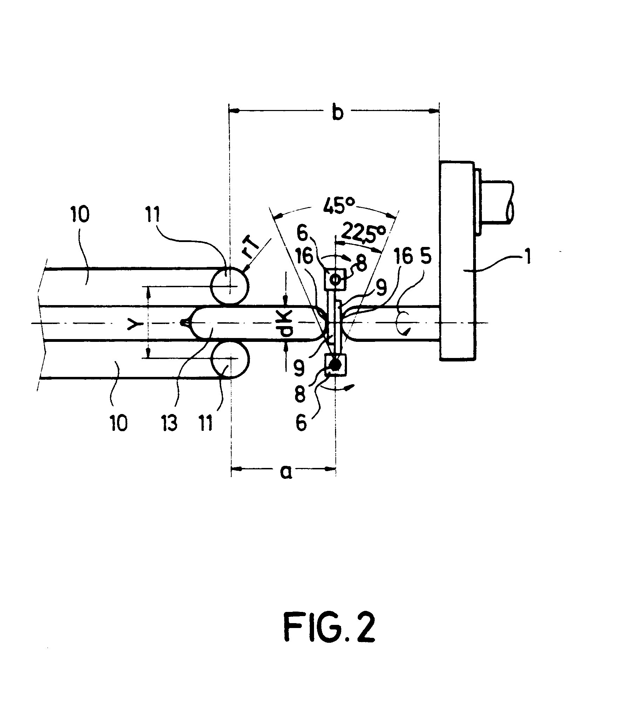

Die Vorrichtung arbeitet wie folgt:
Wie insbesondere in der Figur 2 dargestellt, wird der von der Füllmaschine 17 kommende Wurststrang 5 durch den Bremsring 1, der über das Getriebe 2 durch den Elektromotor 3 angetrieben wird, in Drehung versetzt, wie durch den Pfeil angedeutet ist.

Die gegensinnig und synchron umlaufenden Verdrängerelemente 9 (in Figur 2 durch die Pfeile angedeutet), kommen mit dem sich drehenden Wurststrang 5 in Berührung, wenn sie je nach Kaliber etwa einen Winkel von 45° einschließen.

Während die Verdrängerelemente 9 mit dem Wurststrang 5 in Eingriff sind, ist ihre Drehzahl so geregelt, daß die Umlaufgeschwindigkeit ihres Kreuzungspunktes (Durchlaß 25 für die Wursthülle) mit der Fortschreitgeschwindigkeit des Wurststranges 5 im wesentlichen übereinstimmt, die durch die Endlosbänder 10 erzwungen wird.

Der Wurststrang 5 dreht sich während des Einengens durch die Verdrängerelemente 9 noch so lang, bis das vordere, bereits abgedrehte Ende der Wurst 13 von den Endlosbändern 10 erfaßt wird und eine weitere Einschnürung bei der folgenden Portion erfolgt. Nachdem sich der rückwärtige Wurststrang 5 weiterdreht, erfolgt dabei ein Abdrehen des rückwärtigen Endes 16 der Wurst.

Wenn die Verdrängerelemente 9 mit konstanter Drehzahl umlaufen, werden Würste einer bestimmten Länge erzeugt, die bei einem gleichbleibenden Kaliber eine bestimmte Portionsgröße aufweisen.

Sollen nun Würste mit größerer Länge hergestellt werden, so regelt die elektronische Steuerung 4 die Umlaufgeschwindigkeit der Verdrängerelemente 9 so, daß sie außer Eingriff mit dem Wurststrang 5, also funktionslos, langsamer umlaufen.

Um Würste sehr großer Länge erzeugen zu können, kann die Umlaufgeschwindigkeit der Verdrängerelemente 9 während der funktionslosen Phase bis auf Null geregelt werden, so daß sie eine bestimmte Zeit stillstehen. Um dabei dennoch ein sicheres Abteilen zu ermöglichen, wird schließlich der Bremsring 1 stillgesetzt, so daß sich der Wurststrang 5 nicht dreht und deshalb ohne Störung zwischen die Endlosbänder 10 einlaufen kann. Erst wenn die Verdrängerelemente 9 den Wurststrang 5 abteilen, wird in diesem Fall der Bremsring 1 in Drehung versetzt und somit die Wurst von sehr großer Länge abgedreht.

Wenn die Umlaufgeschwindigkeit der Verdrängerelemente 9 während ihrer funktionslosen Phase vergrößert wird, werden kürzere Würste erzielt. Die kleinste Portionslänge ergibt sich aus dem Abstand a in Figur 2, abhängig vom Radius rT der Umlenkräder und der Länge rV der Verdrängerelemente 9.

Wenn Würste mit sehr großem Kaliber hergestellt werden sollen, können die Verdrängerelemente gemäß der Ausbildung Figur 6 verwendet werden. Dazu können die Verdrängerelemente 9 gemäß der Ausbildung nach Figur 3 von der zugehörigen Antriebswelle 8 abgenommen und die großen Verdrängerelemente 9 aufgesetzt werden. Außerdem muß auch der Bremsring gegen einen größeren ausgetauscht werden. Dabei ist der Abstand Y der Endlosbänder in bekannter Weise zu vergrößern. Selbstverständlich muß die Verdrängereinheit dann so ausgebildet sein, daß auch der Anstand der Antriebswellen 8 entsprechend vergrößert werden kann.

Die dargestellte und beschriebene Ausbildung der Verdrängerflügel 20 gemäß Figur 3 ermöglicht es, damit Wurststränge in einem Bereich von etwa 13 mm Durchmesser bis etwa 30 mm Durchmesser abzuteilen.

Beim Abteilvorgang drehen sich die Verdrängerflügel verschränkt ineinander, wobei schließlich die beiden Wurzeln derV-Ausschnitte einen in der Figur 5 ersichtlichen, sehr kleinen Durchlaß 25 für die Einschnürstelle bilden. Dies wird dadurch ermöglicht, daß die Flügel an dieser Stelle sehr dünn sind und sich praktisch bis zur seitlichen Anlage nähern. Das verschränkte Ineinanderdrehen der Verdrängerflügel 20 wird durch die konkaven Aussparungen 22 und 22' und ggf. durch die kreissektorförmigen Aussparungen 23, 23' bzw. 24, 24' ermöglicht. Trotzdem weisen die Flügel insbesondere im Bereich der Befestigungsstelle an der Lagerhülse 19 eine beträchtliche Dicke auf, so daß auch bei sehr hohen Umlaufgeschwindigkeiten keine Gefahr der Beschädigung besteht, obwohl die Beanspruchung der Flügel beim Abteilen verhältnismäßig groß ist.

Jeder Verdrängerflügel 20 kann mit der zugehörigen Lagerhülse 19 einstückig aus Kunststoff gefertigt sein. Dies ist nicht nur aus lebensmitteltechnischen Gründen vorteilhaft, sondern auch im Zusammenhang mit der Herstellung, denn die konkaven Aussparungen in Form von räumlich gewölbten Flächen lassen sich einfach herstellen, wenn jede Verdrängereinheit aus Kunststoff gespritzt wird.

Mit der Vorrichtung können nicht nur aus Wurstbrät gefertigte Würste hergestellt werden, sondern auch solche aus anderen pastösen Massen.

**Patentansprüche**

1. Vorrichtung zum Abteilen eines von einer Füllmaschine kommenden durchgehenden Wurststranges in einzelne Würste, bestehend aus einer Einrichtung zum Drehen des Wurststranges, einer Abteileinrichtung mit mindestens zwei um je eine Antriebsachse gegenläufig umlaufend angetriebenen, V-förmigen, gegensinnig schrägen und beim Abteilvorgang mit den V-Ausschnitten verschränkt ineinandergreifenden, plattenförmigen Verdrängerelementen und einer die abgeteilten Würste weiterfördernden Transporteinrichtung, **dadurch gekennzeichnet,** daß jedes Verdrängerelement (9) im Bereich der Wurzel des V-Ausschnittes (15) relativ zu ihrer sonstigen Wandstärke dünn ausgebildet ist.

2. Vorrichtung zum Abteilen eines von einer Füllmaschine kommenden durchgehenden Wurststranges in einzelne Würste, bestehend aus einer Einrichtung zum Drehen des Wurststranges, einer Abteileinrichtung mit mindestens zwei um je eine Antriebsachse gegenläufig umlaufend angetriebenen, V-förmigen, gegensinnig schrägen und beim Abteilvorgang mit den V-Ausschnitten verschränkt ineinandergreifenden, plattenförmigen Verdrängerelementen und einer die abgeteilten Würste weiterfördernden Transporteinrichtung, **dadurch gekennzeichnet,** daß die Verdrängerelemente (9) eine eigene Einheit mit einem eigenen Antrieb (7) bilden, dessen Drehzahl während des Umlaufes durch eine elektronische Steuerung (4) regelbar ist, wobei jedes Verdrängerelement (9) im Bereich der Wurzel des V-Ausschnittes (15) relativ zu ihrer sonstigen Wandstärke dünn ausgebildet ist.

3. Vorrichtung nach Anspruch 1 oder 2, **dadurch gekennzeichnet,** daß jedes Verdrängerelement (9) im Bereich der beiden, an den V-Ausschnitt (15) angrenzenden, radial verlaufenden Rändern (21, 21') diagonal gegenüberliegend je eine konkave Aussparung (22 bzw. 22') aufweist, so daß sich jedes Element (9) vom Bereich der V-Wurzel bis zum Rand (21 bzw. 21') in der Art einer Abwälzfläche verjüngt.

4. Vorrichtung nach mindestens einem der Ansprüche 1 - 3, **dadurch gekennzeichnet,** daß jeder verjüngte Rand (21 bzw. 21') eine kreissektorförmige Aussparung (22 bzw. 22') aufweist.

5. Vorrichtung nach mindestens einem der Ansprüche 1 bis 4,

**dadurch gekennzeichnet,**
daß jedes Verdrängerelement (9) aus Kunststoff besteht.

FIG.1

FIG.2

FIG.3

FIG.4

FIG.6

FIG.5

FIG.7

**Europäisches
Patentamt**

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DD-A-247 829  (RAABE)<br>* das ganze Dokument * *<br>– – – | 1 | A 22 C 11/10 |
| P,A | DE-U-9 012 339  (HANDTMANN)<br>* das ganze Dokument * *<br>– – – | 1,2,5 | |
| P,A | EP-A-0 392 083  (HANDTMANN)<br>* das ganze Dokument * *<br>– – – | 1,2 | |
| A | DE-A-3 104 099  (SCHNELL)<br>– – – – – | | |

RECHERCHIERTE
SACHGEBIETE (Int. Cl.5)

A 22 C

Der vorliegende Recherchenbericht wurde für alle Patentansprüche erstellt

| Recherchenort | Abschlußdatum der Recherche | Prüfer |
|---|---|---|
| Den Haag | 14 November 91 | DE LAMEILLIEURE D. |